# EUROPÄISCHE PATENTSCHRIFT

(11) **EP 2 221 941 B1**
(45) Veröffentlichungstag und Bekanntmachung des Hinweises auf die Patenterteilung: **07.11.2012**
(21) Anmeldenummer: 09002373.0
(22) Anmeldetag: 19.02.2009
(51) Int. Cl.: H02J 7/00

(54) **Entladeschutzvorrichtung**
Discharge protection device
Dispositif de protection de déchargement

(43) Veröffentlichungstag der Anmeldung: 25.08.2010
(73) Patentinhaber: Delphi Technologies, Inc., Troy MI 48007 (US)
(72) Erfinder: Bergmann, Jürgen, 45665 Recklinghausen (DE)
(74) Vertreter: Denton, Michael John

(56) Entgegenhaltungen:
- WO-A-2008/001199
- DE-A1- 10 056 795
- DE-A1- 10 322 875
- DE-A1-102004 026 383

## Beschreibung

Die Erfindung betrifft eine Entladeschutzvorrichtung für eine Batterie, insbesondere Kraftfahrzeugbatterie, mit einer über eine Ansteuerelektronik ansteuerbaren Schalteinrichtung, die zwischen der Batterie und einem oder mehreren, insbesondere einem Bordnetz zugeordneten elektrischen Verbrauchern angeordnet ist und zwei zueinander parallele Schalteinheiten umfasst. Sie betrifft ferner eine Schalteinrichtung für eine solche Entladeschutzvorrichtung.

Um ein vollständiges Entladen einer Kraftfahrzeugbatterie zu vermeiden, sind üblicherweise elektronisch gesteuerte Mittel vorgesehen, um gegebenenfalls Teile des elektrischen Systems von der Batterie zu trennen. Eine solche Trennung erfolgt insbesondere dann, wenn der Kraftfahrzeugmotor ausgeschaltet ist, d.h. die Batterie nicht geladen wird bzw. mit einer Entladung der Batterie zu rechnen ist. Da in einem solchen Fall in der Regel kein zusätzlicher Halte- oder Ruhestrom zur Aufrechterhaltung der stabilen Lage der betreffenden Schaltvorrichtung (Schalter geschlossen oder geöffnet) zugelassen ist, werden solche Schaltvorrichtungen in den meisten Fällen unter Verwendung von bistabilen Relais bzw. Haftrelais verwirklicht, die sehr teuer sind. Zudem muss ein solches bistabiles Relais für den maximalen Strom des betreffenden elektrischen Systems bzw. Bordnetzes ausgelegt sein. Bisher sind somit relativ große, teure Bauteile erforderlich, die zudem auch nicht als Standard-Bauelemente zur Verfügung stehen.

Eine Vorrichtung der eingangs genannten Art ist in der DE-A-103 22 875 beschrieben. Dabei ist ein erster Energiespeicher in einem Starterteilkreis mit einem Starter zum Anlassen des Kraftfahrzeugmotors und ein zweiter Energiespeicher in einem Verbraucherteilkreis mit Verbrauchern verbunden. Der Starterteilkreis ist über ein erstes Koppelelement mit dem Verbraucherteilkreis verbindbar. Sicherheitsrelevante Verbraucher sind über jeweils ein zusätzliches Koppelelement mit dem Starterteilkreis verbindbar. Die beiden Koppelelemente sind jeweils als Halbleiterschaltelement in Form eines Feldeffekttransistors vorgesehen.

Der Erfindung liegt die Aufgabe zugrunde, eine zuverlässigere, preisgünstigere Entladeschutzvorrichtung der eingangs genannten Art zu schaffen.

Dabei soll diese Entladeschutzvorrichtung insbesondere auch einfacher an die Gegebenheiten des jeweiligen elektrischen Systems anpassbar sein. Ferner soll eine entsprechende Entladeschutzvorrichtung angegeben werden.

Diese Aufgabe wird hinsichtlich der Entladeschutzvorrichtung erfindungsgemäß dadurch gelöst, dass die beiden Schalteinheiten so ausgeführt sind, dass deren zur Aufrechterhaltung des jeweiligen geschlossenen Zustandes erforderliche Halteströme unterschiedlich groß sind dass die Ansteuerung der beiden Schalteinheiten durch die Ansteuerelektroriik in Abhängigkeit von der Größe des jeweils zu schaltenden Laststromes erfolgt und dass durch die Ansteuerelektronik bei größeren zu schaltenden Lastströmen die den größeren Haltestrom aufweisende Schalteinheit und bei im Vergleich dazu kleineren zu schaltenden Lastströmen die den kleineren Haltestrom aufweisende Schalteinheit in den geschlossenen Zustand gesteuert wird.

Dabei können die beiden Schalteinheiten insbesondere gegensinnig angesteuert werden, das heißt wenn die eine Schalteinheit in ihren geschlossenen Zustand gesteuert wird, wird die andere Schalteinheit in deren offenen Zustand gesteuert.

Bevorzugt ist der Haltestrom einer der beiden Schalteinheiten null. Von Vorteil ist insbesondere auch, wenn die den kleineren Haltestrom aufweisende Schalteinheit für kleinere Lastströme als die den größeren Haltestrom aufweisende Schalteinheit ausgelegt ist.

Die Erfindung macht sich somit den Umstand zunutze, dass während eines normalen Betriebs, bei dem der Laststrom größer ist als im Standby-Betrieb, der Energieverbrauch aufgrund des Haltestroms praktisch nicht ins Gewicht fällt, d.h. eine übermäßige Reduzierung bzw. Reduzierung des Haltestroms auf null nicht erforderlich ist. So wird beispielsweise im Fall einer Kraftfahrzeugbatterie die Batterie bei eingeschaltetem Kraftfahrzeugmotor geladen. Ein möglichst geringer Haltestrom ist nur im Standby-Modus bzw. bei abgeschaltetem Kraftfahrzeugmotor und/oder kritischem Batteriezustand erforderlich. Zudem ist in einem solchen Standby-Modus der zu schaltende Laststrom in der Regel deutlich reduziert, so dass es genügt, wenn die betreffende Schalteinheit für diesen geringeren zu schaltenden Laststrom ausgelegt ist.

Es sind somit also beispielsweise die beiden Betriebsarten "Normalbetrieb" und "Standby-Betrieb" möglich. Dabei kann im Normalbetrieb der zu schaltende Laststrom relativ hoch sein, so dass zusätzlicher Energieverbrauch für die Aufrechterhaltung des geschlossenen Schalterzustandes zulässig ist, der hier praktisch nicht ins Gewicht fällt. Dagegen wird im Standby-Modus der zu schaltende Laststrom in der Regel klein sein , so dass entsprechend auch der für die Aufrechterhaltung des geschlossenen Schalterzustandes erforderliche Energieverbrauch zu minimieren ist bzw. gleich null gesetzt wird.

Demgegenüber wird bei einem bistabilen Relais, wie es bei den bisher üblichen Ladeschutzvorrichtungen der eingangs genannten Art verwendet wird, nicht zwischen einem Normalbetrieb und einem Standby-Modus unterschieden. Es ist zwar jeweils kein Haltestrom erforderlich, das Relais muss jedoch stets für den höheren zu schaltenden Laststrom ausgelegt sein, so dass das betreffende Relais relativ groß und teuer ist.

Gemäß einer zweckmäßigen praktischen Ausführungsform der erfindungsgemäßen Entladeschutzvorrichtung ist über die Ansteuerelektronik jeweils nur eine der beiden einen unterschiedlichen Haltestrom aufweisenden, zueinander parallelen Schalteinheiten in den geschlossenen Zustand steuerbar.

Es kann also beispielsweise die eine Schalteinheit während des Normalbetriebs durch die Ansteuerelektronik in den geschlossenen Zustand gesteuert werden. Über sie kann dann der relativ hohe Laststrom geschaltet werden. Der durch den Haltestrom auftretende Energieverlust fällt dabei praktisch nicht ins Gewicht. Dagegen kann die andere Schalteinheit beispielsweise in einem Standby-Modus durch die Ansteuerelektronik in den geschlossenen Zustand gesteuert werden. Da in diesem Standby-Modus in der Regel wesentlich geringere Lastströme geschaltet werden müssen, ist diese Schalteinheit vorteilhafterweise für die entsprechend geringeren zu schaltenden Lastströme ausgelegt und entsprechend billiger. In diesem Fall ist auch der Haltestrom minimiert bzw. gleich null, so dass die Batterie nicht zusätzlich belastet wird.

Vorteilhafterweise ist die den größeren Haltestrom aufweisende Schalteinheit insbesondere so ausgeführt, dass sie zur Aufrechterhaltung ihres offenen Zustandes praktisch keinen Ruhestrom fordert bzw. auch in diesem Fall der Ruhestrom null ist.

Es können insbesondere auch Mittel zur Überwachung des Zustandes der Batterie vorgesehen sein.

Die Ansteuerung der beiden Schalteinheiten durch die Ansteuerelektronik kann insbesondere auch in Abhängigkeit vom jeweiligen Zustand der Batterie erfolgen.

Gemäß einer zweckmäßigen praktischen Ausführungsform der erfindungsgemäßen Entladeschutzvorrichtung wird für den Entladeschutz einer Kraftfahrzeugbatterie durch die Ansteuerelektronik bei eingeschaltetem Kraftfahrzeugmotor die den größeren Haltestrom aufweisende Schalteinheit in den geschlossenen Zustand gesteuert, während bei ausgeschaltetem Kraftfahrzeugmotor zumindest bei definierten kritischen Batteriezuständen die den kleineren Haltestrom aufweisende Schalteinheit in den geschlossenen Zustand gesteuert wird.

In sämtlichen Fällen ist bevorzugt jeweils eine gegensinnige Ansteuerung der beiden zueinander parallelen Schalteinheiten vorgesehen.

Die den kleineren Haltestrom aufweisende Schalteinheit kann insbesondere wenigstens ein bistabiles Relais umfassen.

Bevorzugt umfasst wenigstens eine der beiden Schalteinheiten jeweils wenigstens einen Halbleiterschalter.

So ist insbesondere eine solche Ausführung denkbar, bei der die den kleineren Haltestrom aufweisende Schalteinheit wenigstens einen FET (Feldeffekttransistor), insbesondere P-Kanal-FET, umfasst.

Die den größeren Haltestrom aufweisende Schalteinheit umfasst bevorzugt wenigstens einen Leistungs-MOSFET, insbesondere Highside-Leistungs-MOSFET mit Ladungspumpe. Alternativ oder zusätzlich kann sie jedoch beispielsweise wenigstens ein monostabiles Relais umfassen.

Die den kleineren Haltestrom aufweisende Schalteinheit kann beispielsweise auch wenigstens einen Thyristor umfassen.

Es sind beliebige Kombinationen der genannten Elemente für die beiden Schalteinheiten denkbar.

So ist beispielsweise eine reine Halbleiterlösung denkbar, die beispielsweise eine Kombination von wenigstens einem Leistungs-MOSFET und wenigstens einem P-FET beispielsweise auf einer Platine oder als integrierte Bauelemente (Hybrid) umfasst.

Überdies ist beispielsweise eine Halbleiterlösung für die kleineren zu schaltenden Lastströme mit wenigstens einem P-FET z.B. auf einer Leiterplatte, z.B. integriert in der Steuerelektronik, und ein externes monostabiles Relais für die größeren zu schaltenden Ströme möglich.

Es können beispielsweise auch ein insbesondere kleines bistabiles Relais für kleinere zu schaltende Lastströme beispielsweise als Leiterplattenmontage oder ein externes Relais kombiniert mit einem insbesondere großem externem monostabilem Relais vorgesehen sein.

Es sind beliebige weitere Kombinationen der für die beiden Schalteinheiten bzw. Schalteinrichtung genannten Bauelemente denkbar.

Die erfindungsgemäße Schalteinrichtung zeichnet sich entsprechend dadurch aus, dass sie zwei zueinander parallele Schalteinheiten umfasst, die so ausgeführt sind, dass deren zur Aufrechterhaltung des jeweiligen geschlossenen Zustandes erforderliche Halteströme unterschiedlich groß sind, wobei vorzugsweise die den kleineren Haltestrom aufweisende Schalteinheit für kleinere Lastströme als die den größeren Haltestrom aufweisende Schalteinheit ausgelegt ist.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform einer Entladeschutzvorrichtung und
- Fig. 2: eine schematische Darstellung einer beispielhaften Ausführungsform der Schalteinrichtung.

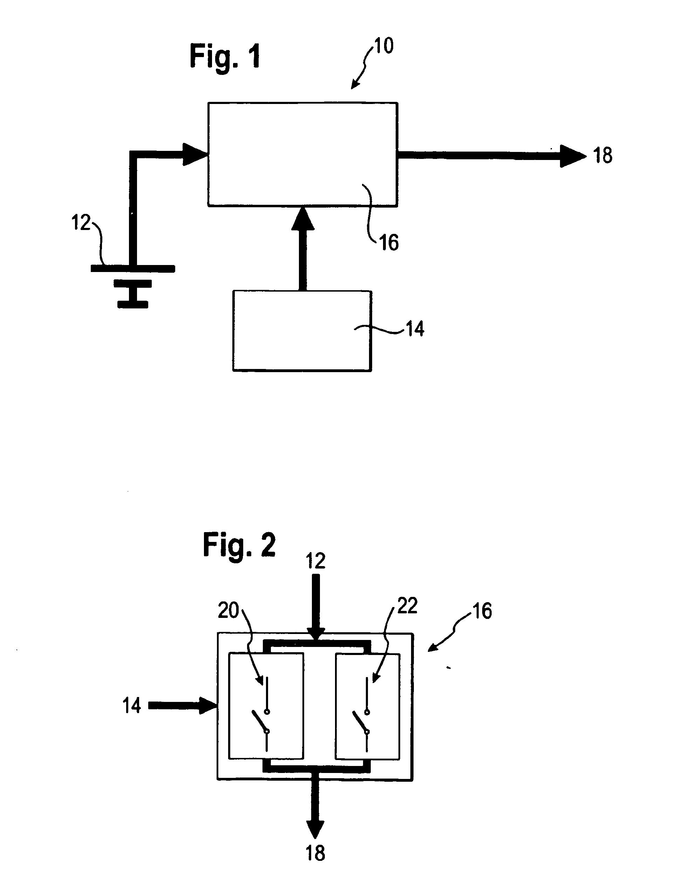

Fig. 1 zeigt in schematischer Darstellung eine beispielhafte Ausführungsform einer Entladeschutzvorrichtung 10 für eine Batterie 12, bei der es sich beispielsweise um eine Kraftfahrzeugbatterie handeln kann.

Die Entladeschutzvorrichtung 10 umfasst eine über eine Steuerelektronik 14 ansteuerbare Schalteinrichtung 16, die zwischen der Batterie 12 und einem oder mehreren, beispielsweise einem Bordnetz 18 zugeordneten elektrischen Verbrauchern angeordnet ist.

In Fig. 2 ist in schematischer Darstellung eine beispielhafte Ausführungsform der Schalteinrichtung 16 gezeigt.

Danach umfasst diese Schalteinrichtung 16 zwei zueinander parallele Schalteinheiten 20, 22. Dabei sind diese Schalteinheiten 20, 22 so ausgeführt, dass deren zur Aufrechterhaltung des jeweiligen geschlossenen Zustands erforderliche Halteströme unterschiedlich groß sind. So ist im vorliegenden Fall beispielsweise der Haltestrom der Schalteinheit 20 kleiner als der Haltestrom der Schalteinheit 22. Bevorzugt ist der Haltestrom der Schalteinheit 20 zumindest im Wesentlichen null.

Zudem kann diese den kleineren Haltestrom aufweisende Schalteinheit 20 für kleinere Lastströme als die den größeren Haltestrom aufweisende Schalteinheit 22 ausgelegt sein.

Die Ansteuerelektronik 14 kann insbesondere so ausgeführt sein, dass jeweils nur eine der beiden einen unterschiedlichen Haltestrom aufweisenden Schalteinheiten 20, 22 in den geschlossenen Zustand gesteuert wird.

Die Ansteuerung der beiden Schalteinheiten 20, 22 durch die Ansteuerelektronik 14 kann beispielsweise in Abhängigkeit von der Größe des jeweils zu schaltenden Laststroms erfolgen. Dabei kann die Ansteuerelektronik 14 insbesondere so ausgeführt sein, dass bei größeren zu schaltenden Lastströmen die den größeren Haltestrom aufweisende Schalteinheit 22 und bei im Vergleich dazu kleineren zu schaltenden Lastströmen die den kleineren Haltestrom aufweisende Schalteinheit 20 in den geschlossenen Zustand gesteuert wird.

Zudem können insbesondere auch Mittel zur Überwachung des Zustandes der Batterie 12 (vgl. auch Fig. 1) vorgesehen sein. Diese Mittel können zumindest teilweise in der Steuerelektronik 14 integriert sein.

Die Ansteuerung der beiden Schalteinheiten 20, 22 durch die Ansteuerelektronik 14 kann insbesondere auch in Abhängigkeit vom jeweiligen Zustand der Batterie 12 erfolgen.

Beispielsweise für den Entladeschutz einer Kraftfahrzeugbatterie kann die Ansteuerelektronik 14 insbesondere so ausgeführt sein, dass bei eingeschaltetem Kraftfahrzeugmotor die den größeren Haltestrom aufweisende Schalteinheit 22 in den geschlossenen Zustand gesteuert wird und bei ausgeschaltetem Kraftfahrzeugmotor zumindest bei definierten kritischen Batteriezuständen, z.B. bei Abfallen der Batteriespannung unter einen vorgebbaren Wert, die den kleineren Haltestrom aufweisende Schalteinheit 20 in dem geschlossenen Zustand gesteuert wird.

Die den kleineren Haltestrom aufweisende Schalteinheit 20 kann beispielsweise ein insbesondere kleines bistabiles Relais, einen P-Kanal-FET und/oder einen Thyristor umfassen.

Dagegen kann die den größeren Haltestrom aufweisende Schalteinheit 22 beispielsweise wenigstens ein insbesondere großes monostabiles Relais und/oder wenigstens einen Leistungs-MOSFET, insbesondere Highside-Leistungs-MOSFET mit Ladungspumpe, umfassen.

Grundsätzlich sind sämtliche Kombinationen der bezüglich der beiden Schalteinheiten 20, 22 erwähnten Schaltelemente denkbar.

Es ist beispielsweise eine reine Halbleiterlösung möglich, die beispielsweise eine Kombination aus einem Leistungs-MOSFET und einem P-FET beispielsweise auf einer Platine oder als integrierte Bauelemente (Hybrid) umfasst.

Möglich ist beispielsweise auch eine Halbleiterlösung für kleine zu schaltende Lastströme wie z.B. ein P-FET auf beispielsweise einer Leiterplatte, z.B. integriert in der Steuerelektronik 14, und ein externes monostabiles Relais.

Denkbar ist unter anderem beispielsweise auch ein insbesondere kleines bistabiles Relais für kleine zu schaltende Lastströme beispielsweise als Leiterplattenmontage oder externes Relais kombiniert mit einem insbesondere großen externen monostabilen Relais.

Grundsätzlich sind auch beliebige andere Kombinationen verschiedener Schaltelemente denkbar.

### Bezugszeichenliste

- 10: Entladeschutzvorrichtung
- 12: Batterie
- 14: Steuerelektronik
- 16: Schalteinrichtung
- 18: Bordnetz
- 20: Schalteinheit
- 22: Schalteinheit

## Patentansprüche

1. Entladeschutzvorrichtung (10) für eine Batterie (12), insbesondere Kraftfahrzeugbatterie, mit einer über eine Ansteuerelektronik (14) ansteuerbaren Schalteinrichtung (16), die zwischen der Batterie (12) und einem oder mehreren, insbesondere einem Bordnetz (18) zugeordneten elektrischen Verbrauchern angeordnet ist und zwei zueinander parallele Schalteinheiten (20, 22) umfasst, **dadurch gekennzeichnet,**
**dass** die beiden Schalteinheiten (20, 22) so ausgeführt sind, dass deren zur Aufrechterhaltung des jeweiligen geschlossenen Zustandes erforderliche Halteströme unterschiedlich groß sind,
**dass** Ansteuerelektronik (14) so ausgeführt ist, dass die Ansteuerung der beiden Schalteinheiten (20, 22)
in Abhängigkeit von der Größe des jeweils zu schaltenden Laststromes erfolgt und
**dass** die Ansteuerelektronik (14) so ausgeführt ist, dass bei größeren zu schaltenden Lastströmen die den größeren Haltestrom aufweisende Schalteinheit (22) und bei im Vergleich dazu kleineren zu schaltenden Lastströmen die den kleineren Haltestrom aufweisende Schalteinheit (20) in den geschlossenen Zustand gesteuert wird.

2. Entladeschutzvorrichtung nach Anspruch 1,
**dadurch gekennzeichnet,**
**dass** der Haltestrom (20) einer der beiden Schalteinheiten (20, 22) null ist.

3. Entladeschutzvorrichtung nach Anspruch 1 oder 2,
**dadurch gekennzeichnet,**
**dass** die den kleineren Haltestrom aufweisende Schalteinheit (20) für kleinere Lastströme als die den größeren Haltestrom aufweisende Schalteinheit (22) ausgelegt ist.

4. Entladeschutzvorrichtung nach einem der vorhergehenden Ansprüche,
**dadurch gekennzeichnet,**
**dass** über die Ansteuerelektronik (14) jeweils nur eine der beiden einen unterschiedlichen Haltestrom aufweisenden Schalteinheiten (20, 22) in den geschlossenen Zustand steuerbar ist.

5. Entladeschutzvorrichtung nach einem der vorhergehenden Ansprüche,
**dadurch gekennzeichnet,**
**dass** Mittel zur Überwachung des Zustandes der Batterie (12) vorgesehen sind.

6. Entladeschutzvorrichtung nach einem der vorhergehenden Ansprüche,
**dadurch gekennzeichnet,**
**dass** die Ansteuerung der beiden Schalteinheiten (20, 22) durch die Ansteuerelektronik (14) in Abhängigkeit vom jeweiligen Zustand der Batterie (12) erfolgt.

7. Entladeschutzvorrichtung nach einem der vorhergehenden Ansprüche,
**dadurch gekennzeichnet,**
**dass** für den Entladeschutz einer Kraftfahrzeugbatterie durch die Ansteuerelektronik (14) bei eingeschaltetem Kraftfahrzeugmotor die den größeren Haltestrom aufweisende Schalteinheit (22) in den geschlossenen Zustand gesteuert wird und bei ausgeschaltetem Kraftfahrzeugmotor zumindest bei definierten Batteriezuständen die den kleineren Haltestrom aufweisende Schalteinheit (20) in den geschlossenen Zustand gesteuert wird.

8. Entladeschutzvorrichtung nach einem der vorhergehenden Ansprüche,
**dadurch gekennzeichnet,**
**dass** die den kleineren Haltestrom aufweisende Schalteinheit (20) wenigstens ein bistabiles Relais umfasst.

9. Entladeschutzvorrichtung nach einem der vorhergehenden Ansprüche,
**dadurch gekennzeichnet,**
**dass** wenigstens eine der beiden Schalteinheiten (20, 22) jeweils wenigstens einen Halbleiterschalter umfasst.

10. Entladeschutzvorrichtung nach Anspruch 9,
**dadurch gekennzeichnet,**
**dass** die den kleineren Haltestrom (20) aufweisende Schalteinheit wenigstens einen FET, insbesondere P-Kanal-FET, umfasst.

11. Entladeschutzvorrichtung nach einem der vorhergehenden Ansprüche,
**dadurch gekennzeichnet,**
**dass** die den größeren Haltestrom aufweisende Schalteinheit (22) wenigstens ein monostabiles Relais und/oder wenigstens einen Leistungs-MOSFET, insbesondere Highside-Leistungs-MOSFET mit Ladungspumpe, umfasst.

12. Entladeschutzvorrichtung nach einem der vorhergehenden Ansprüche,
**dadurch gekennzeichnet,**
**dass** die den kleineren Haltestrom aufweisende Schalteinheit (20) wenigstens einen Thyristor umfasst.

13. Schalteinrichtung mit zugeordneter Ansteuerelektronik (14), insbesondere für eine Entladeschutzvorrichtung nach einem der vorhergehenden Ansprüche, mit zwei zueinander parallelen Schalteinheiten (20, 22),
**dadurch gekennzeichnet,**
**dass** die beiden Schalteinheiten (20, 22) so ausgeführt sind, dass deren zur Aufrechterhaltung des jeweiligen geschlossenen Zustandes erforderliche Halteströme unterschiedlich groß sind, wobei vorzugsweise die den kleineren Haltestrom aufweisende Schalteinheit (20) für kleinere Lastströme als die den größeren Haltestrom aufweisende Schalteinheit (22) ausgelegt ist,
**dass** Ansteuerelektronik (14) so ausgeführt ist, dass die Ansteuerung der beiden Schalteinheiten (20, 22)
in Abhängigkeit von der Größe des jeweils zu schaltenden Laststromes erfolgt und
**dass** die Ansteuerelektronik (14) so ausgeführt ist, dass bei größeren zu schaltenden Lastströmen die den größeren Haltestrom aufweisende Schalteinheit (22) und bei im Vergleich dazu kleineren zu schaltenden Lastströmen die den kleineren Haltestrom aufweisende Schalteinheit (20) in den geschlossenen Zustand gesteuert wird.

## Claims

1. Discharge protection device (10) for a battery (12), in particular a motor vehicle battery, having a switching device (16) controllable by a control electronics unit (14), disposed between the battery (12) and one or more electrical consumers, associated in particular with an on-board power supply (18), and including two parallel switching units (20, 22),
**characterized in that**
the two switching units (20, 22) are configured such that their holding currents required for maintaining the respective closed state are of different amount,
the control electronics unit (14) is configured such that control of the two switching units (20, 22) is respectively effected depending on the amount of each load current to be switched, and
the control electronics unit (14) is configured such that with larger load currents to be switched the switching unit (22) having the larger holding current and in comparison with smaller load currents to be switched the switching unit (20) having the smaller holding current is controlled into the closed state.

2. Discharge protection device according to claim 1,
**characterized in that**
the holding current (20) of one of the two switching units (20, 22) is zero.

3. Discharge protection device according to claim 1 or 2,
**characterized in that**
the switching unit (20) having the smaller holding current is configured for smaller load currents than the switching unit (22) having the larger holding current.

4. Discharge protection device according to any preceding claim, **characterized in that**
only one of the switching units (20, 22) having different holding currents
is controllable via the control electronics unit (14) into the closed state respectively.

5. Discharge protection device according to any preceding claim, **characterized in that**
means are provided for monitoring the state of the battery (12).

6. Discharge protection device according to any preceding claim, **characterized in that**
control of the two switching units (20, 22) by the control electronics unit (14) is performed depending on the respective state of the battery (12).

7. Discharge protection device according to any preceding claim, **characterized in that**
for discharge protection of a motor vehicle battery by the control electronics unit (14), the switching unit (22) having the larger holding current is controlled into the closed state, when the motor vehicle engine is on, and, when the motor vehicle engine is off, the switching unit (20) having the smaller holding current is controlled into the closed state, at least with defined battery states.

8. Discharge protection device according to any preceding claim, **characterized in that**
the switching unit (20) having the smaller holding current includes at least one bistable relay.

9. Discharge protection device according to any preceding claim, **characterized in that**
at least one of the two switching units (20, 22) includes at least one semiconductor switch.

10. Discharge protection device according to claim 9,
**characterized in that**
the switching unit (20) having the smaller holding current includes at least one FET, in particular P-channel-FET.

11. Discharge protection device according to any preceding claim, **characterized in that**
the switching unit (22) having the larger holding current includes at least one monostable relay and/or at least one power MOSFET, in particular a Highside power MOSFET with charge pump.

12. Discharge protection device according to any preceding claim, **characterized in that**
the switching unit (20) having the smaller holding current includes at least one thyristor.

13. Switching device with associated control electronics unit (14), in particular for a discharge protection device according to any preceding claim, having two parallel switching units (20, 22),
**characterized in that**
the two switching units (20, 22) are configured such that their holding currents required for maintaining the respective closed state are of different amount, wherein preferably the switching unit (20) having the smaller holding current is configured for smaller load currents than the switching unit (22) having the larger holding current,
the control electronics unit (14) is configured such that control of the two switching units (20, 22) is effected depending on the amount of each load current to be switched, and
the control electronics unit (14) is configured such that with larger load currents to be switched the switching unit (22) having the larger holding current and in comparison with smaller load currents to be switched the switching unit (20) having the smaller holding current is controlled into the closed state.

## Revendications

1. Dispositif de protection anti-décharge (10) pour une batterie (12), en particulier batterie de véhicule automobile, comprenant un système de commutation (16) susceptible d'être piloté via une électronique de pilotage (14), système qui est agencé entre la batterie (12) et un ou plusieurs appareils électriques utilisateurs en particulier associés à un réseau de bord (18) et qui inclut deux unités de commutation (20, 22) mutuellement parallèles,
**caractérisé en ce que**
les deux unités de commutation (20, 22) sont réalisées de telle façon que leurs courants de maintien nécessaires pour maintenir la situation fermée respective sont d'intensités différentes,
**en ce que** l'électronique de pilotage (14) est réalisée de telle façon que le pilotage des deux unités de commutation (20, 22) a lieu en fonction de l'intensité du courant en charge qu'il s'agit respectivement de commuter, et
l'électronique de pilotage (14) est réalisée de telle façon que lorsque les courants de charge à commuter sont plus importants, c'est l'unité de commutation (22) qui présente le courant de maintien le plus fort qui est commandée vers la situation fermée, et lorsque les courants de charge à commuter sont comparativement plus faibles, c'est l'unité de commutation (20) qui présente le courant de maintien le plus faible qui est commandée vers la situation fermée.

2. Dispositif de protection anti-décharge selon la revendication 1,
**caractérisé en ce que** le courant de maintien (20) de l'une des deux unités de commutation (20, 22) est nul.

3. Dispositif de protection anti-décharge selon la revendication 1 ou 2,
**caractérisé en ce que** l'unité de commutation (20) présentant le courant de maintien le plus faible est conçue pour des courants de charge plus faibles que l'unité de commutation (22) présentant le courant de maintien le plus fort.

4. Dispositif de protection anti-décharge selon l'une des revendications précédentes,
**caractérisé en ce que** seule l'une des deux unités de commutation (20, 22) qui présentent des courants de maintien différents est susceptible d'être commandée vers la situation ferme via l'électronique de pilotage (14).

5. Dispositif de protection anti-décharge selon l'une des revendications précédentes,
**caractérisé en ce qu'**il est prévu des moyens pour surveiller l'état de la batterie (12).

6. Dispositif de protection anti-décharge selon l'une des revendications précédentes,
**caractérisé en ce que** le pilotage des deux unités de commutation (20, 22) par l'électronique de pilotage (14) a lieu en fonction de l'état respectif de la batterie (12).

7. Dispositif de protection anti-décharge selon l'une des revendications précédentes,
**caractérisé en ce que**, pour la protection anti-décharge d'une batterie de véhicule automobile, lorsque le moteur du véhicule est en marche, c'est l'unité de commutation (22) présentant le courant de maintien le plus fort qui est commandée vers la situation fermée par l'unité de pilotage (14), et lorsque le moteur du véhicule est à l'arrêt et au moins pour des états définis de la batterie, c'est l'unité de commutation (20) présentant le courant de maintien le plus faible qui est commandée vers la situation fermée.

8. Dispositif de protection anti-décharge selon l'une des revendications précédentes,
**caractérisé en ce que** l'unité de commutation (20) présentant le courant de maintien le plus faible comprend au moins un relais bistable.

9. Dispositif de protection anti-surcharge selon l'une des revendications précédentes,
**caractérisé en ce que** l'une au moins des deux unités de commutation (20, 22) inclut respectivement au moins un commutateur à semi-conducteurs.

10. Dispositif de protection anti-surcharge selon la revendication 9,
**caractérisé en ce que** l'unité de commutation présentant le courant de maintien (20) le plus faible inclut au moins un transistor à effet de champ, en particulier un transistor à effet de champ à canal P.

11. Dispositif de protection anti-surcharge selon l'une des revendications précédentes,
**caractérisé en ce que** l'unité de commutation (22) présentant le courant de maintien le plus fort inclut au moins un relais monostable et/ou au moins un transistor de puissance MOSFET, en particulier transistor de puissance MOSFET du côté sous tension avec pompe de charge.

12. Dispositif de protection anti-surcharge selon l'une des revendications précédentes,
**caractérisé en ce que** l'unité de commutation (20) présentant le courant de maintien le plus faible inclut au moins un thyristor.

13. Dispositif de protection anti-surcharge comprenant une électronique de pilotage associé (14), en particulier pour un dispositif de protection anti-décharge selon l'une des revendications précédentes, comprenant deux unités de commutation (20, 22) mutuellement parallèles,
**caractérisé en ce que**
les deux unités de commutation (20, 22) sont réalisées de telle façon que leurs courants de maintien nécessaires pour maintenir la situation fermée respective sont d'intensités différentes, et de préférence l'unité de commutation (20) présentant le courant de maintien le plus faible est conçue pour des courants de charge plus faibles que l'unité de commutation (22) présentant le courant de maintien le plus fort,
**en ce que** l'électronique de pilotage (14) est réalisée de telle façon que le pilotage des deux unités de commutation (20, 22) a lieu en fonction de l'intensité du courant en charge qu'il s'agit respectivement de commuter, et
l'électronique de pilotage (14) est réalisée de telle façon que lorsque les courants de charge à commuter sont plus importants, c'est l'unité de commutation (22) qui présente le courant de maintien le plus fort qui est commandée vers la situation fermée, et lorsque les courants de charge à commuter sont comparativement plus faibles, c'est l'unité de commutation (20) qui présente le courant de maintien le plus faible qui est commandée vers la situation fermée.
